# EUROPEAN PATENT SPECIFICATION

(11) **EP 2 975 266 B1**
(45) Date of publication and mention of the grant of the patent: **05.10.2016**
(21) Application number: 15176438.8
(22) Date of filing: 13.07.2015
(51) Int. Cl.: F04B 27/18, F04B 53/10, F16K 11/07

(54) **CONTROL VALVE FOR VARIABLE DISPLACEMENT COMPRESSOR**
REGELVENTIL FÜR EINEN VERDICHTER MIT VARIABLER VERDRÄNGUNG
SOUPAPE DE CONTRÔLE POUR COMPRESSEUR À DÉPLACEMENT VARIABLE

(30) Priority: 18.07.2014 JP 2014148177; 05.02.2015 JP 2015020818
(43) Date of publication of application: 20.01.2016
(73) Proprietor: TGK CO., Ltd., Tokyo 193-0942 (JP)
(72) Inventor: YOSHIHIRO, Ryousuke, Tokyo, 193-0942 (JP); SAEKI, Shinji, Tokyo, 193-0942 (JP); KUSAKA, Satoshi, Tokyo, 193-0942 (JP); TAKAKUWA, Kiyokazu, Tokyo, 193-0942 (JP)
(74) Representative: Schröer, Gernot H.

(56) References cited:
- EP-A2- 1 628 017
- WO-A2-2012/008787
- JP-A- 2005 171 908
- US-B1- 6 361 472

## Description

The present invention relates to a control valve for controlling the discharging capacity of a variable displacement compressor.

An automotive air conditioner is generally configured by arranging and placing a compressor, a condenser, an expander, an evaporator, and so forth in a refrigeration cycle. The compressor is, for example, a variable displacement compressor (hereinafter referred to simply as "compressor" also) capable of varying the refrigerant discharging capacity in order to maintain a constant level of cooling capacity irrespective of the engine speed. In this compressor, a piston for compression is linked to a wobble plate, which is mounted to a rotational shaft rotatingly driven by an engine. The refrigerant discharging rate is regulated by changing the stroke of the piston through changes in the angle of the wobble plate. The angle of the wobble plate is changed continuously by changing the balance of pressure working on both faces of the piston as part of the discharged refrigerant is introduced into a hermetically-closed crankcase. The pressure within this crankcase (hereinafter referred to as "crank pressure") Pc is controlled by a control valve for a variable displacement compressor (hereinafter referred to simply as "control valve" also), which is provided between the discharge chamber and the crankcase of the compressor.

Such a control valve is often configured as an electromagnetic valve and has a valve hole within the body. Here, the valve hole is formed between the discharge chamber and the crankcase; the discharge chamber and the crankcase are communicated with each other through this valve hole. The opening degree of a valve section is regulated by moving a valve element, placed within the body, toward and away from the valve hole, thereby controlling the flow rate of refrigerant introduced into the crankcase. The valve opening degree is regulated by a balance among a force, generated by a refrigerant pressure, acting on the valve element, a drive force generated by a solenoid, and a biasing force of a spring placed for the purpose of regulating a control setting value. This control setting value can also be adjusted at a later time by changing the current value supplied to the solenoid. In such a control valve, a PWM (Pulse Width Modulation) technique is often employed for controlling the electric conduction state of the solenoid, in terms of reducing the hysteresis in the valve opening characteristics and achieving the power saving, for instance. For example, the discharging capacity is controlled by supplying a pulse current of about 400 Hz where the pulse width has been set to a predetermined duty ratio (see Reference (1) in the following Related Art List, for instance).

### Related Art List

(1) Japanese Unexamined Patent Application Publication No. 2005-171908.

In such a control valve, the aforementioned conduction state control causes a plunger of the solenoid to generate micro-vibration. The vibration is transmitted to the valve element, which in turn may possibly generate noise.

A purpose of the present invention is to suppress the noise caused by micro-vibration of a plunger in a control valve, for a variable displacement compressor, where the conduction state is controlled by using the PWM technique.

One embodiment of the present invention relates to a control valve, for a variable displacement compressor, which varies a discharging capacity of the compressor for compressing refrigerant led into a suction chamber and which discharges the compressed refrigerant from a discharge chamber, by regulating a flow rate of the refrigerant led into a crankcase from the discharge chamber. The control valve includes: a body having a discharge chamber communication port communicating with the discharge chamber, a crankcase communication port communicating with the crankcase, and a valve hole formed in a passage connecting the discharge chamber communication port and the crankcase communication port; a valve element for opening and closing a valve section, the valve element being arranged in such a manner as to move toward and away from the valve hole; a solenoid that generates a magnetic attractive force with which to drive the valve element in a valve closing direction, wherein a conduction state of the solenoid is controlled by a PWM (Pulse Width Modulation) technique; and a transmitting rod that transmits a drive force, generated by the solenoid, to the valve element, the transmitting rod being supported within the body and moving in a direction of axis line.

The solenoid includes: a bobbin; an electromagnetic coil wound around the bobbin; a core fixed to the body coaxially with the bobbin; a plunger disposed opposite to the core in a direction of axis line inside the bobbin, the plunger being displaceable integrally with the transmitting rod in the direction of axis line; a yoke, provided in such a manner as to surround the electromagnetic coil as well as the core and the plunger, the yoke forming a magnetic circuit when the electromagnetic coil electrically conducts; and an asymmetrical structure by which balance of the magnetic attractive force radially acting on the plunger is biased toward one side, the asymmetrical structure including a structural portion asymmetric with respect to the axis line of the bobbin.

By employing this embodiment, the asymmetrical structure is provided in the solenoid. As a result, the balance of the magnetic attractive force radially acting on the plunger is biased toward one side. In other words, since the plunger is attracted toward one side relative to the axis line, the sliding resistance of the plunger or a supporting member, when the plunger operates, can be made appropriately large. As a result, the micro-vibration of the valve element due to the PWM control can be suppressed and the noise caused by the micro-vibration can be suppressed.

- FIG. 1: is a system chart showing a refrigeration cycle of an automotive air conditioner according to a first embodiment;
- FIG. 2: is a cross-sectional view showing a structure of a control valve according to a first embodiment;
- FIG. 3: is a partially enlarged cross-sectional view of the upper half of FIG. 2;
- FIG. 4A and FIG. 4B: are each a partially enlarged view of a control valve;
- FIGS. 5A to 5C: are each a partially enlarged view of a control valve;
- FIG. 6: is a graph showing a control characteristic of a solenoid;
- FIGS. 7A and 7B: show major components of a control valve according to a second embodiment;
- FIGS. 8A and 8B: show major components of a control valve according to a third embodiment; and
- FIGS. 9A and 9B: show major components of a control valve according to a fourth embodiment.

The invention will now be described by reference to the preferred embodiments. This does not intend to limit the scope of the present invention, but to exemplify the invention.

Embodiments of the present invention will now be described in detail with reference to the accompanying drawings. In the following description, for convenience of description, the positional relationship in each structure may be expressed as "vertical" or "up-down" with reference to how each structure is depicted in Figures.

### [First Embodiment]

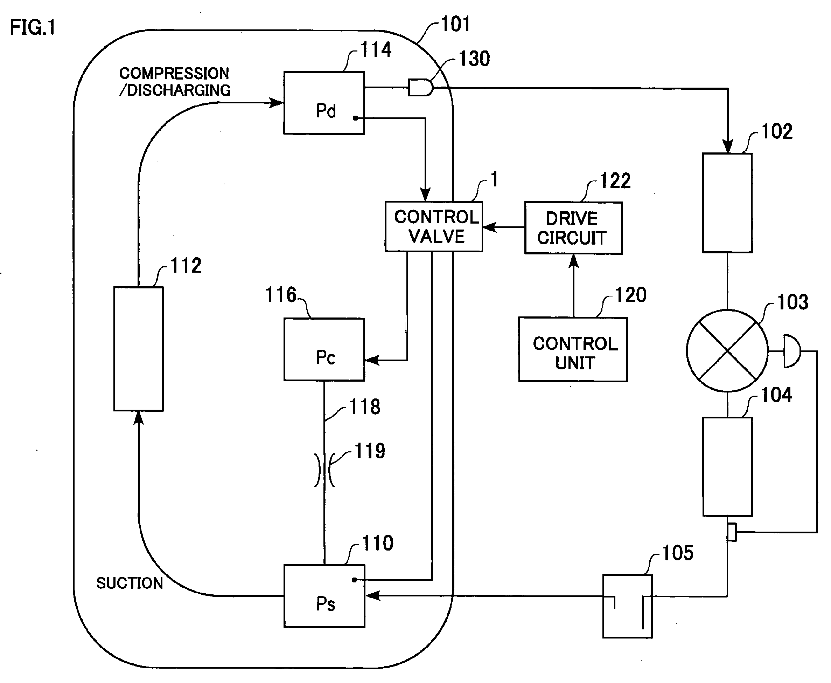

FIG. 1 is a system chart showing a refrigeration cycle of an automotive air conditioner according to a first embodiment.

The air conditioner according to the present embodiment includes a so-called supercritical refrigeration cycle that uses carbon dioxide, which operates under a high pressure, as the refrigerant. This air conditioner includes a variable displacement compressor (hereinafter referred to simply as "compressor" also) 101, a gas cooler 102, an expander 103, an evaporator 104, and a receiver 105. Here, the compressor 101 compresses a gaseous refrigerant circulating through the refrigeration cycle. The gas cooler 102 functions as an external heat exchanger that cools a compressed high-pressure gaseous refrigerant. The expander 103 adiabatically expands the cooled refrigerant so as to reduce the pressure thereof. The evaporator 104 evaporates the expanded refrigerant and removes the evaporative latent heat so as to cool air inside a vehicle's compartment. The receiver 105 separates the evaporated refrigerant into gas refrigerant and liquid refrigerant and then returns the thus separated gaseous carbon dioxide to the compressor 101.

The compressor 101 has a not-shown rotational shaft, which is freely rotatably supported within crankcase 116, which functions as a "control chamber". A wobble plate is tiltably provided in this rotational shaft. And an end of the rotational shaft extends outside the crankcase 116 and is connected to an output shaft of an engine by way of a pulley. A plurality of cylinders 112 are arranged around the rotational shaft, and a piston, which performs a reciprocating motion by the rotational motion of the wobble plate, is provided in each cylinder 112. Each cylinder 112 is connected to a suction chamber 110 through a suction valve and is connected to a discharge chamber 114 through a discharge valve. The compressor 101 compresses the refrigerant, which has been led into the cylinders 112 through the suction chamber 110, and discharges the compressed refrigerant through the discharge chamber 114.

The angle of the wobble plate of the compressor 101 is kept in a position where, for example, the load of a spring biasing the wobble plate in the crankcase 116 and the load caused by the pressures working on both faces of the piston connected to the wobble plate are balanced. This angle of the wobble plate can be changed continuously as follows. That is, a crank pressure Pc is changed as part of the discharged refrigerant is introduced into the crankcase 116, and the balance of pressures working on the both faces of the piston is changed, thereby changing continuously the angle thereof. Changing the stroke of the piston by varying the angle of the wobble plate regulates the discharging capacity of refrigerant. The crank pressure Pc is controlled by a control valve 1, which is provided between the discharge chamber 114 and the crankcase 116 of the compressor 101.

In other words, a part of the discharged refrigerant of the compressor 101 is led into the crankcase 116 by way of the control valve 1 and is used to control the capacity of the compressor 101. The control valve 1 is configured as a solenoid-driven electromagnetic valve, and the electric conduction state and/or amount is controlled by a control unit 120. In the present embodiment, the control unit 120 outputs a pulse signal, which has been set to a predetermined duty ratio, to a drive circuit 122. Then the control unit 120 has the drive circuit 122 output a current pulse associated with the duty ratio. In this manner, the solenoid is driven. The control valve 1 regulates the flow rate of refrigerant delivered from the discharge chamber 114 to the crankcase 116 such that a differential pressure (Pd - Ps) between a discharge pressure Pd and a suction pressure Ps of the compressor 101 can be brought closer to a preset differential pressure, which is a control target value. Thereby, the discharging capacity of the compressor 101 varies. That is, the control valve 1 functions as a so-called (Pd - Ps) differential pressure regulating valve.

An orifice 119 is provided in a refrigerant passage 118 through which the crankcase 116 and the suction chamber 110 communicate. The refrigerant inside the crankcase 116 is leaked to a suction chamber 110 side through the orifice 119, so that the crank pressure Pc will not be excessively high. A check valve 130 is provided in a refrigerant passage provided between the discharge chamber 114 and a refrigerant outlet in the compressor 101.

The control unit 120 includes a CPU for performing various arithmetic processings, a ROM for storing various control programs, a RAM used as a work area for data storage and program execution, an I/O interface, and so forth. The control unit 120 has a PWM output unit for outputting a pulse signal having a specified duty ratio. However, such a PWM output unit may be configured using a known art and therefore the detailed description thereof is omitted here. The control unit 120 determines the aforementioned preset differential pressure, based on predetermined external information detected by various sensors (e.g., the engine speed, the temperatures inside and outside the passenger compartment, and the air-blowout temperature of the evaporator 104). Also, the control unit 120 controls the electric conduction state of and/or amount to the control valve 1 in order to obtain a solenoidal force required to maintain the preset differential pressure. Suppose now that there is a request for cutting down on the acceleration for the purpose of reducing the load torque of the compressor 101 during a high load state (e.g., while a vehicle is accelerating or running uphill). Then, the control unit 120 turns off the solenoid or suppresses the electric conduction amount to a predetermined lower limit, and thereby switches the variable displacement compressor to a minimum operation mode where the compressor operates with the minimum capacity.

The expander 103, which is configured as a so-called thermostatic-expansion valve, regulates a valve opening degree by feeding back the temperature of refrigerant at an outlet side of the evaporator 104 and then supplies a liquid refrigerant, which meets a thermal load, to the evaporator 104. The refrigerant, which has passed through the evaporator 104, is returned to the compressor 101 via the receiver 105 and is again compressed.

The check valve 130 maintains its opened state as long as the discharging capacity of the compressor 101 is large to a certain degree and a differential pressure (Pd - Pd1) between the discharge pressure Pd of the discharge chamber 114 and an outlet pressure Pd1 at the refrigerant outlet exceeds a valve opening differential pressure. This valve opening differential pressure is set by the load of a built-in spring of the check valve 130. If, in contrast thereto, the discharging capacity of the compressor 101 is small and the discharge pressure Pd does not sufficiently get high (e.g., during the minimum capacity operation), the check valve 130 will be closed due to the biasing force of the spring and thereby the back-flow of refrigerant from a gas cooler 102 side to the discharge chamber 114 will be prevented. Note that the check valve 130 is closed while the compressor 101 is operating with the minimum capacity. However, the refrigerant discharged from the discharge chamber 114 is returned to the suction chamber 110 via the control valve 1 and the crankcase 116. Thus, the internal circulation of refrigerant gas within the compressor 101 is assured.

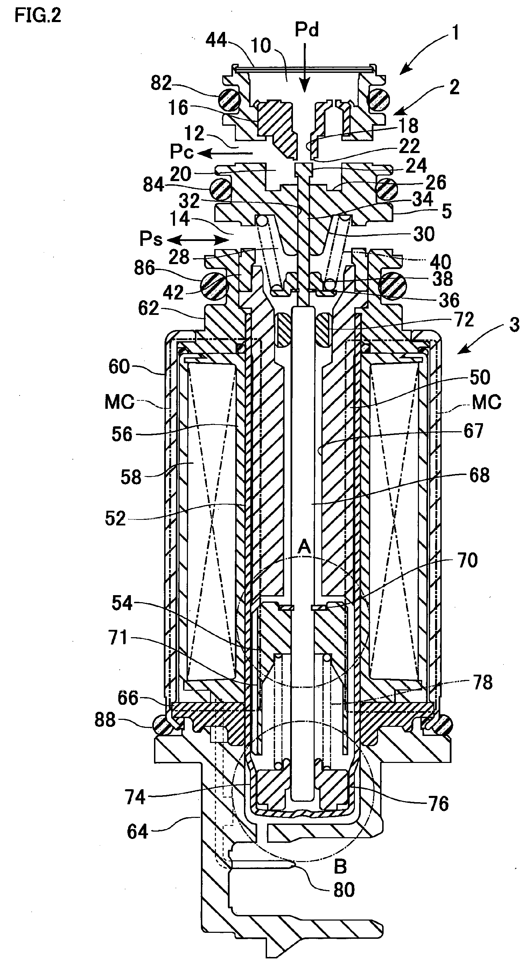

FIG. 2 is a cross-sectional view showing a structure of the control valve 1 according to the first embodiment. The control valve 1 is constituted by integrally assembling a valve unit 2 and a solenoid 3. The valve unit 2 has a body 5 of stepped cylindrical shape. Though the body 5 is formed of brass in the present embodiment, it may be formed of an aluminum alloy. The body 5 has ports 10, 12, and 14 in this order from top down. Of these ports, the port 10 is provided in an upper end of the body 5, and the ports 12 and 14 are each provided on a lateral side thereof. The port 10 functions as a "discharge chamber communication port" that communicates with the discharge chamber 114. The port 12 functions as a "crankcase communication port" (corresponding to a "control chamber communication port") that communicates with the crankcase 116. The port 14 functions as a "suction chamber communication port" that communicates with the suction chamber 110. Though the "control chamber" in the present embodiment is formed by a crankcase, it may be a pressure chamber separately provided within or outside the crankcase, in a modification.

In the body 5, a valve seat forming member 16 of stepped cylindrical shape is provided in a passage that communicates between the port 10 and the port 12. The valve seat forming member 16 is formed by quenching a stainless steel (e.g., SUS420), and is formed of a metal whose hardness is higher than that of the body 5. The valve seat forming member 16 is coaxially inserted into an upper portion of the body 5 and is secured such that the upper portion of the body 5 is swaged inward. The valve seat forming member 16 has a through-hole along an axis line, and a lower half of the through-hole forms a valve hole 18. A valve chamber 20, which communicates with the port 12, is formed below the valve seat forming member 16 in the body 5. The lower half of the valve seat forming member 16 is of tapered shape such that the outside diameter thereof is gradually reduced from an upper part to a lower part of the lower half thereof, and the lower half thereof extends into the valve chamber 20. A valve seat 22 is formed on a lower end surface of the valve seat forming member 16. A valve element 24 is provided in the valve chamber 20 in such a manner as to face the valve seat 22 from below. The opening degree of a valve section is regulated by moving the valve element 24 toward and away from the valve seat 22.

In the present embodiment as described above, a soft material is used for a material constituting the body 5 and thereby its high processability is kept. At the same time, a material or member constituting the valve seat 22 (the valve seat forming member 16) is formed of a material having a higher degree of hardness, so that the wear and deformation of the valve seat 22 are prevented or suppressed. This allows the seating characteristics of the valve element 24 to be satisfactorily maintained. In other words, since in the present embodiment the control valve 1 is applied to the supercritical refrigeration cycle that uses carbon dioxide as the refrigerant, the discharge pressure Pd of the compressor 101 becomes extremely high. This may possibly cause cavitation to occur when the high-pressure refrigerant passes through the valve section while the valve section is open, or have a foreign material contained in the refrigerant hit the valve seat 22 at high speed. As a result, the valve seat 22 is more likely to be worn away and a deformation (erosion) is more likely to progress in the valve seat 22 if the valve seat 22 is formed of a soft material similar to the body 5. This in turn may possibly degrade the sealing property of the valve section and cause a variation in a control set value (set value). In contrast to this, in the present embodiment, the material strength (the degree of hardness) of the valve seat 22 and its surrounding area is raised, so that the aforementioned adverse effects can be prevented or suppressed.

A partition wall 26 is so provided that an internal space of the body 5 is divided into an upper space and a lower space. The valve chamber 20 is formed on an upper side of the partition wall 26, and a working chamber 28 is formed on a lower side thereof. The valve chamber 20 communicates with the crankcase 116 through the port 12. The working chamber 28 communicates with the suction chamber 110 through the port 14. A guide portion 30, which extends in a direction of axis line, is provided in a center of the partition wall 26. A guiding passage 32 is so formed as to run through the guide portion 30 along the axis line, and an elongated actuating rod 34 is slidably inserted to the guiding passage 32 in the direction of axis line. The valve element 24 is provided coaxially on an upper end of the actuating rod 34. The valve element 24 and the actuating rod 34 are formed integrally with each other by performing a cutting work on a stainless steel.

The guide portion 30 protrudes as a small bump on an upper surface side of the partition wall 26 and protrudes as a large protrusion on a lower surface side thereof. The guide portion 30 is of tapered shape such that the outside diameter thereof is gradually reduced from an upper part to a lower part thereof, and the guide portion 30 extends into the working chamber 28. With this configuration and arrangement, a sufficient length of the guiding passage 32 is ensured and the actuating rod 34 is stably supported. The valve element 24 and the actuating rod 34 operate and move integrally together with each other, and the valve element 24 closes and opens the valve section by touching and leaving the valve seat 22, respectively, on the upper end surface of the valve element 24. The hardness of the valve seat forming member 16 is sufficiently high. Thus, the valve seat 22 is hardly deformed by repeated seating of the valve element 24 on the valve seat 22, thereby ensuring the durability of the valve section.

A retaining ring 36 (E-ring) is fitted to a lower part of the actuating rod 34, and a discoidal spring support 38 is provided such that the movement of the lower part of thereof in a downward direction is restricted. A spring 40, which biases the actuating rod 34 downward (in a valve closing direction) (functioning as a "first biasing member"), is set between the spring support 38 and the partition wall 26. The spring 40 is a tapered spring where the diameter thereof is reduced starting from the lower surface of the partition wall 26 toward the spring support 38 located therebelow. Having the guide portion 30 formed in a tapered shape as described above allows the tapered-shape spring 40 to be arranged as described above. A lower part of the body 5 is a small-diameter part 42 and constitutes a coupling portion with the solenoid 3.

A filter member 44, which suppresses foreign materials from entering the port 10, is provided in an upper end opening of the body 5. Since the foreign material, such as metallic powders, may possibly be contained in the refrigerant discharged from the compressor 101, the filter member 44 prevents or suppresses the foreign material from entering the interior of the control valve 1. The filter member 44 is configured such that two sheets of metal meshes are vertically superimposed on each other.

The solenoid 3 includes a cylindrical core 50, a bottomed cylindrical sleeve 52 inserted around the core 50, a plunger 54, which is contained in the sleeve 52 and which is disposed opposite to the core 50 in the direction of axis line, a cylindrical bobbin 56 inserted around the sleeve 52, an electromagnetic coil 58 wound around the bobbin 56, a cylindrical casing 60, which is so provided as to cover the electromagnetic coil 58 from outside, a connecting member 62 of stepped cylindrical shape, which is assembled, between the core 50 and the casing 60, in a position above the bobbin 56, and an end member 64, which is so provided as to seal off a lower end opening of the casing 60.

The sleeve 52 and the plunger 54 are each formed of electromagnetic soft iron (SUY) excellent in magnetic characteristics. The electromagnetic soft iron is a material characterized by the features where the impurity concentration is low, the magnetic flux density is high, the magnetic permeability is high, and a small magnetic coercive force is obtained. More specifically, the electromagnetic soft iron as used herein is, for example, SUY-1 where the processability is excellent (because it has an appropriate degree of hardness) and a small magnetic coercive force (60 to 80 A/m) is obtained. Thereby, a necessary solenoidal force can be ensured even though the current supplied to the solenoid 3 is relatively low. This allows the electromagnetic coil 58 and eventually the control valve 1 to be downsized.

The sleeve 52, which is formed of a non-magnetic material, houses the plunger 54 in a lower half thereof. A circular collar 66 is embedded in the end member 64. The collar 66 is set, between the sleeve 52 and the casing 60, in a position below the bobbin 56. The casing 60, the connecting member 62 and the collar 66, which are each formed of a magnetic material, form a yoke of the solenoid 3. When the solenoid 3 electrically conducts, a magnetic circuit MC is formed by the yoke, the core 50 and the plunger 54. The valve unit 2 and the solenoid 3 are secured such that the small-diameter part 42 (lower end part) of the body 5 is press-fitted to an upper end opening of the connecting member 62. It is to be noted here that, in the present embodiment, the body 5, the valve seat forming member 16, the connecting member 62, the casing 60 and the end member 64 form a body for the whole control valve 1.

An insertion hole 67 is so formed as to run through the core 50 in a center thereof in the direction of axis line. And a shaft 68 is inserted into the insertion hole 67 in such a manner as to penetrate along the insertion hole 67. The shaft 68 is formed coaxially with the actuating rod 34 and supports the actuating rod 34 from below. The diameter of the shaft 68 is larger than that of the actuating rod 34. The plunger 54 is assembled to a lower half of the shaft 68. In the present embodiment, the shaft 68 and the actuating rod 34 constitute a "transmitting rod" that transmits the solenoidal force to the valve element 24.

The plunger 54 is coaxially supported by the shaft 68 in an upper portion of the plunger 54. A retaining ring 70 (E-ring) is fitted to a predetermined position in an intermediate part of the shaft 68 in the direction of axis line, and the retaining ring 70 works to restrict the movement of the plunger 54 in an upward direction. A communicating groove 71 formed in parallel with the axis line is provided on a lateral surface of the plunger 54. The communicating groove 71 forms a communicating path through which the refrigerant is made to pass between the plunger 54 and sleeve 52.

A ring-shaped shaft support member 72 is press-fitted in an upper end of the core 50, and an upper end of the shaft 68 is slidably supported by the shaft support member 72 in the direction of axis line. An outer periphery of the shaft support member 72 is partially notched and thereby a communicating path is formed between the core 50 and the shaft support member 72. Through this communicating path, the suction pressure Ps of the working chamber 28 is led into the interior of the solenoid 3, too.

The diameter of a lower end of the sleeve 52 is slightly reduced, and a ring-shaped shaft support member 76 (functioning as a "supporting member") is press-fitted to a reduced diameter portion 74 of the sleeve 52. The shaft support member 76 slidably supports a lower end part of the shaft 68. In other words, the shaft 68 is two-point supported by both the shaft support member 72 in an upper side thereof and the shaft support member 76 in a lower side thereof, so that the plunger 54 can be stably operated in the direction of axis line. An outer periphery of the shaft support member 76 is partially notched and thereby a communicating path is formed between the sleeve 52 and the shaft support member 76. The suction pressure Ps introduced into the solenoid 3 fills the interior of the sleeve 52 through the communicating path between the core 50 and the shaft 68, the communicating path between the plunger 54 and the sleeve 52, and the communicating path between the shaft support member 76 and the sleeve 52.

A spring 78 (functioning as a "second spring") that biases the plunger 54 in an upward direction, namely in a valve closing direction, is set between the shaft support member 76 and the plunger 54. In other words, as the spring load, the valve element 24 receives the net force of a force exerted by the spring 40 in a valve opening direction and a force exerted by the spring 78 in a valve closing direction. However, the spring load of the spring 40 is larger than that of the spring 78. Thus, the overall spring load of the springs 40 and 78 works in a valve opening direction. The spring load thereof can be set by adjusting the press-fitting position of the shaft support member 76 in the sleeve 52. The press-fitting position thereof can be fine-adjusted such that a bottom center of the sleeve 52 is deformed in the direction of axis line by using a predetermined tool after the shaft support member 76 has been temporarily press-fitted to the sleeve 52.

A pair of connection terminals 80 connected to the electromagnetic coil 58 extend from the bobbin 56 and are led outside by passing through the end member 64. Note that only one of the pair of connection terminals 80 is shown in FIG. 2 for convenience of explanation. The end member 64 is mounted in such a manner as to seal the entire structure inside the solenoid 3 contained in the casing 60 from below. The ends of the connection terminals 80 are led out from the end member 64 and connected to a not-shown external power supply. The end member 64 also functions as a connector portion through which the connection terminal 80 is exposed.

The control valve 1 configured as above is secured into a not-shown mounting hole formed in the compressor 101 via a washer. A plurality of O-rings, which are set between the mounting holes and the control valve 1 and which achieve the sealing capability, are fitted on an outer peripheral surface of the control valve 1. Annular grooves are formed on peripheries of the body 5 above and below the port 12, respectively, and O-rings 82 and 84 are fitted on the annular grooves. An annular groove is also formed on a periphery of the connecting member 62 below the port 14, and an O-ring 86 is fitted on the annular groove. Furthermore, an O-ring 88 is fitted on a connection area where the casing 60 and the end member 64 are connected.

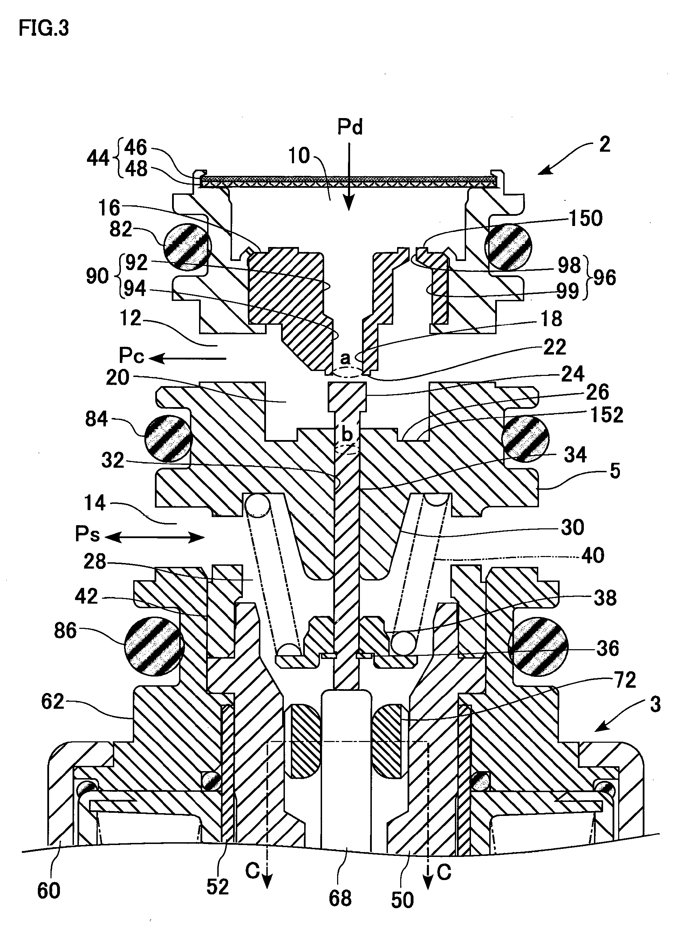

FIG. 3 is a partially enlarged cross-sectional view of the upper half of FIG. 2.

The filter member 44 is configured such that the two sheets of metal meshes 46 and 48 are superimposed on each other in the thickness direction. In other words, the mesh 46 is so arranged as to face the outer side of the body 5, and the mesh 48 is so arranged as to face the inner side thereof. The reason why the meshes 46 and 48 are made from metal is that the filter member 44 is placed on a high pressure side of the supercritical refrigeration cycle; thus, if resin-made meshes are used, the pressure resistance strength thereof will be insufficient.

The meshes 46 and 48 are both formed in a circular sheet shape, but differ in mesh size and in rigidity (stiffness properties) from each other. In other words, the mesh 46 has a finer mesh size than the mesh 48; the mesh 46 has a smaller porosity than the mesh 48. On the other hand, the mesh 48 has a larger wire diameter than the mesh 46 and has a higher rigidity than the mesh 46. This is to achieve a high filtering function by the mesh 46 and ensure (reinforce) the strength of the entire filter member 44 by the mesh 48.

The filter member 44 is placed in such a manner as to be inserted in the upper end opening of the body 5, and then the filter member 44 is secured such that an upper end of the body 5 is swaged inward. In this manner, the filter member 44 is of a simple structure such that the two sheets of meshes are directly placed on each other and are fixed directly to the body 5, so that the component cost and the manufacturing cost can be suppressed. Since, as shown in FIG. 3, the filter member 44 is placed inside the body 5, any deformation and/or damage caused through contact with an external structural object or the like can be prevented or suppressed.

The diameter of a through-hole 90, which is formed in a center of the valve seat forming member 16, is reduced in a lower half thereof. This reduced diameter portion of the through-hole 90 forms the valve hole 18. In other words, the upper half of the through-hole 90 is a large-diameter part 92, whereas the lower half thereof is a small-diameter part 94. And the small-diameter part 94 forms the valve hole 18. A connection area in between the large-diameter part 92 and the small-diameter part 94 is a tapered surface where the inside diameter thereof is gradually reduced downward. The diameter of the through-hole 90 is reduced in stages from an upstream side to a downstream side.

A bleed hole 96 in parallel with the through-hole 90 is formed in radially outward direction of the through-hole 90 in the valve seat forming member 16. The bleed hole 96 is used to ensure the circulation of oil in the compressor 101 by delivering a minimum required amount of refrigerant to the crankcase 116 even when the valve section is closed. The refrigerant contains a lubricating oil in order to ensure a stabilized operation of the compressor 101, and the bleed hole 96 is to ensure the oil circulation inside and outside the crankcase 116.

The bleed hole 96 is formed such that a leak passage 98 located in an upper part thereof and a communication passage 99 located in a lower part thereof are connected together. The inside diameter of the leak passage 98 is of a size to a degree that the refrigerant is made to leak therethrough, and the inside diameter thereof is fairly smaller than that of the valve hole 18. The inside diameter of the communication passage 99 is smaller than that of the large-diameter part 92 of the through-hole 90 and larger than that of the small-diameter part 94 thereof. In a modification, the inside diameter of the communication passage 99 may be greater than or equal to that of the large-diameter part 92 of the through-hole 90 or may be less than or equal to that of the small-diameter part 94 thereof.

A connection area of the leak passage 98 and the communication passage 99 is a tapered surface where the inside diameter thereof is gradually enlarged downward. The diameter of the bleed hole 96 is enlarged in stages from an upstream side to a downstream side. An annular raised portion 150 is formed on a top surface of the valve seat forming member 16 in such a manner as to surround the through-hole 90, and the raised portion 150 is of a stepped shape such that a radially inward portion and a radially outward portion of the valve seat forming member 16 are lower than the raised portion 150. The width of the raised portion 150 is sufficiently small and is less than or equal to that of the valve hole 18 in the present embodiment. The leak passage 98 is opened upward in a position of the raised portion 150.

As described above, the bleed hole 96 is formed such that an inlet of refrigerant has a small diameter and the inlet thereof is opened on the top surface of a stepped shape. Thus, the entry of foreign material through the bleed hole 96 is prevented or suppressed. In other words, if a foreign material, whose size is smaller than the mesh size (mesh width) of the filter member 44, enters the port 10, it is highly improbable that the foreign material will enter through the bleed hole 96. This is because the width of the raised portion 150 is sufficiently small and the size of the inlet of the bleed hole 96 is smaller than the width of the raised portion 150. If the foreign material hits the raised portion 150, it is highly probable that the foreign material is dropped to a lower position inside or outside the raised portion 150. In particular, even though the refrigerant flows through the bleed hole 96 when the valve section is closed, the foreign material contained in the refrigerant is unlikely to be led into the bleed hole 96. If the foreign material enters the port 10 when the valve section is open, most of such foreign material will pass through the valve hole 18 and be discharged from the port 12.

Also, in the valve chamber 20, the guide portion 30 protrudes in a central part of the upper surface of the partition wall 26 and thereby an annular groove 152 is formed on the periphery of this protrusion (the guide portion 30). The outside diameter of the valve element 24 is slightly larger than that of the actuating rod 34 located immediately beneath the valve element 24. Thus, if the foreign material enters the valve chamber 20 through the valve hole 18, it is highly improbable that the foreign material will enter a sliding portion of the actuating rod 34 relative to the guiding passage 32. In the event that the foreign material passes through the valve hole 18, most of such the foreign material will be discharged through the port 12 or stay on in the annular groove 152 even though it should remain in the valve chamber 20. Thus, the remaining foreign material is less likely to enter a spacing or gap between the actuating rod 34 and the guiding passage 32. In other words, the annular groove 152 can function to trap the foreign material therein. Hence, this structure prevents the valve element 24 from being locked as a result of the entanglement of foreign material in the sliding portion of the actuating rod 34 relative to the guiding passage 32.

In the present embodiment, the pressure sensitivity of the valve element 24 is optimally set such that a seal section diameter **a** (the inside diameter of the valve hole 18) in the valve section of the valve element 24 is slightly (e.g., by a very small amount) larger than a diameter **b** of the sliding portion of the actuating rod 34 **(a>b).** In other words, such the setting as this increases the extent of contribution of the crank pressure Pc in a valve closing direction at the time the valve section is opened, thereby making it slightly difficult for the valve section to be opened. Thereby, the differential pressure (Pd - Ps) slowly rises and the effect of the crank pressure Pc is raised as compared with the case where **a=b.** As a result, the actuation responsiveness of the wobble plate (cam plate) of the compressor 101 is lowered so as to prevent or suppress the control hunting occurring when the valve section is opened. It is to be noted here that, for example, the technique disclosed in Japanese Patent Application Publication No. 2006-57506 can be used to adjust the pressure sensitivity.

In the present embodiment, as described earlier, the guide portion 30 protrudes as a larger protrusion on a working chamber 28 side than a valve chamber 20 side. Thereby, a lower end of the actuating rod 34 can protrude from a lower end position of the body 5 (i.e., a lower end opening of the small-diameter part 42). This enables the retaining ring 36 to be easily mounted to the actuating rod 34. In other words, in order for the retaining ring 36 to be fitted to the actuating rod 34, the actuating rod 34 must first be inserted from the valve chamber 20 side. This is because the outside diameter of the valve element 24 is larger than the size of the guiding passage 32. On the other hand, in order for the retaining ring 36 to be fitted to the actuating rod 34, a fitting part formed in the actuating rod 34 needs to be exposed from an opening end of the body 5 or at least the fitting part needs to be positioned near the opening end thereof in consideration of the workability. For this reason, if the guide portion 30 extends (protrudes) uniformly both above and below the partition wall 26, the actuating rod 34 needs to be unnecessarily made longer, which is not preferable at all. In the light of this, in the present embodiment, the guide portion 30 is configured such that the guide portion 30 is positioned in a lower part of the body 5. This configuration and arrangement ensure a more stabilized guiding function of the guide portion 30 and maintain an excellent workability when the retaining ring 36 is to be mounted. Since the actuating rod 34 will not be unnecessarily long, the body 5 and eventually the control valve 1 are made smaller-sized.

Furthermore, in the present embodiment as described above, the guide portion 30 and the spring 40 are each taper-shaped such that the outside diameter thereof becomes gradually smaller downward. Thus, a lower half of the spring 40 is contained in an upper end opening of the core 50, and the outside diameter of the small-diameter part 42 is made as small as possible. Thereby, the outside diameter of the connecting member 62 is made smaller, and an O-ring whose outside diameter is smaller can be selected as the O-ring 86. As a result, when the control valve 1 is to be mounted through the mounting holes of the compressor 101, the effect of the refrigerant pressure acting in a direction opposite to a mounting direction is reduced. That is, an area below the O-ring 86 has an atmospheric air pressure; if the size of the O-ring 86 is large, a fixing structure having a high pressure withstanding property need be implemented in order to prevent the control valve 1 from fall off. In this regard, the O-ring 86 can be made small in the present embodiment and therefore it suffices that the control valve 1 has a simple fixing structure such as a washer.

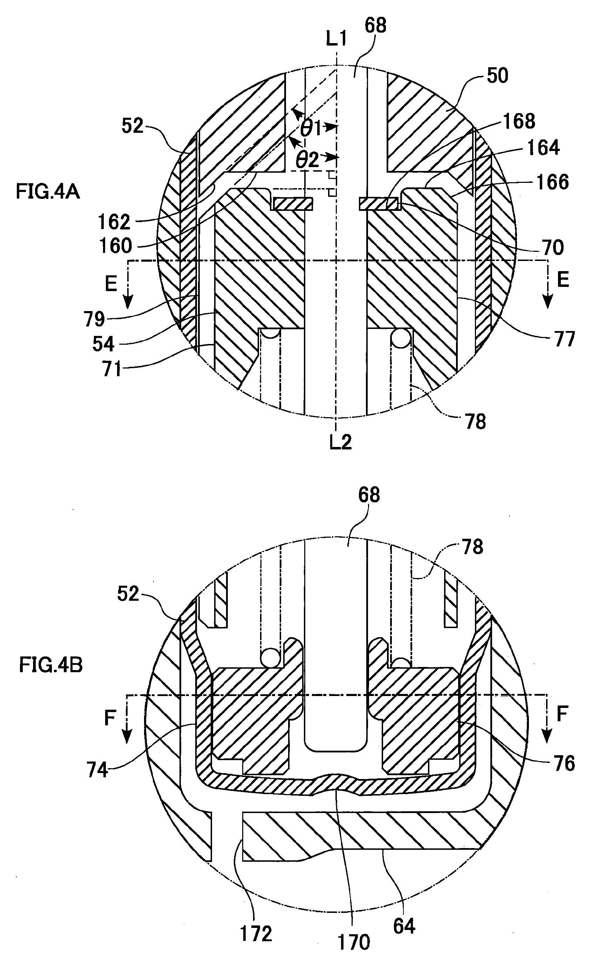

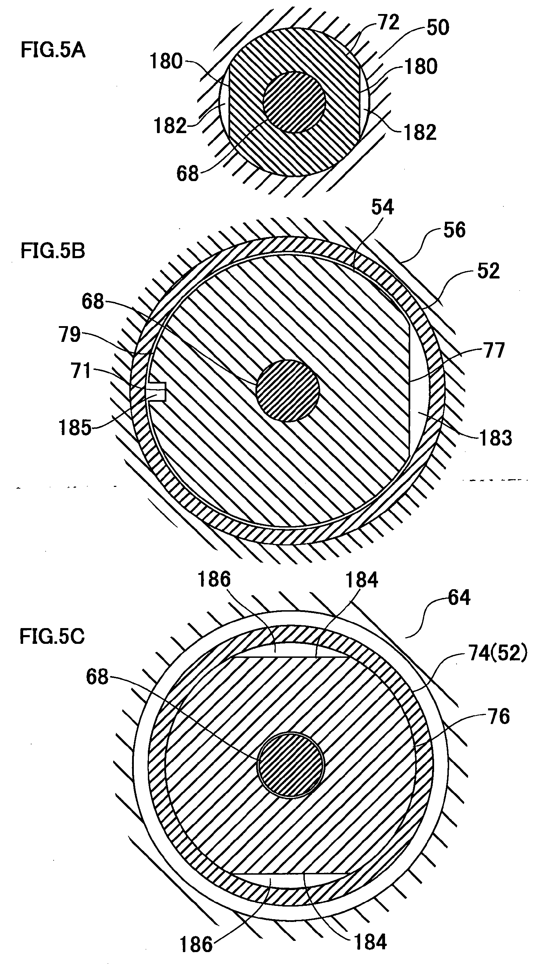

FIGS. 4A and 4B and FIGS. 5A to 5C are each a partially enlarged view of the control valve 1. FIG. 4A is an enlarged view of a region **A** encircled in FIG. 2, and FIG. 4B is an enlarged view of a region **B** encircled in FIG. 2. FIG. 5A is a cross-sectional view taken along the line C-C and viewed on the arrows of FIG. 3. FIG. 5B is a cross-sectional view taken along the line E-E on the arrows of FIG. 4A. FIG. 5C is a cross-sectional view taken along the line F-F on the arrows of FIG. 4B.

As illustrated in FIG. 4A, a surface of the core 50 is disposed counter to a surface of the plunger 54 and vice versa, and these facing surfaces of the core 50 and the plunger 54 are generally complementary in shape to each other. Also, the outer circumferential edge of each facing surface thereof is formed in a tapered shape. In other words, a lower end surface of the core 50 has a flat surface 160 in a central part thereof and a tapered surface 162 in an outer circumferential edge thereof. The flat surface 160 is perpendicular to an axis line L1 of the core 50, the inside diameter of the tapered surface 162 is larger downward, and the tapered surface 162 forms an angle of θ1 relative to the axis line L1. On the other hand, an upper end surface of the plunger 54 has a flat surface 164 in a central part thereof and a tapered surface 166 in an outer circumferential edge thereof. The flat surface 164 is perpendicular to an axis line L2 of the plunger 54, the outside diameter of the tapered surface 166 is smaller upward, and the tapered surface 166 forms an angle of θ2 relative to the axis lines L2. In the present embodiment, θ1 = θ2 = 45 degrees. The setting of the tapered surfaces adjusts the characteristics of the solenoid 3, and its detail will be discussed later.

A recess 168 having a predetermined depth is formed in a center of the flat surface 164 of the plunger 54, and a retaining ring 70 is received by the recess 168. In other words, the interference between the retaining ring 70 and the core 50 is prevented.

As illustrated in FIG. 4B, a recess-like pressing force adjustment part 170 is formed in a center of an underside of the reduced diameter portion 74 in the sleeve 52. A tip of a tool is placed in position and then pressed on the pressing force adjustment part 170. Thereby, a bottom face of the sleeve 52 is deformed in an upward direction of axis line (an inward direction of the sleeve 52) and the press-fitting position of the shaft support member 76 is shifted while the bottom face thereof being deformed. This can fine-adjust the set load by the springs 40 and 78.

In this manner, the shaft support member 76 is press-fitted to the sleeve 52, so that it can be maintained without varying the set load thereof in the event that the bottom face of the sleeve 52 is varied after the set load thereof has been adjusted. In other words, in the present embodiment, as described above, carbon dioxide, which operates in a high pressure, is used as the refrigerant and therefore even the suction pressure Ps is high. Thus, there is a possibility that the bottom portion of the sleeve 52 deformed by the pressing force adjustment part 170 will be deformed in a direction where the bottom portion thereof returns to the original position by the suction pressure Ps. Should this happen, the shaft support member 76 will not be affected by the deformation of the bottom portion thereof because the shaft support member 76 has been firmly secured to the inner wall of the sleeve 52. In other words, by employing the present embodiment, the configuration is such that the press-fitting position of the shaft support member 76 is regulated, so that the set load of the springs can be stably maintained even in a high-pressure environment.

As illustrated in FIG. 4B, a space is formed between the end member 64 and the sleeve 52. A communicating hole 172, which communicates between the space and the exterior, is formed in a bottom portion of the end member 64. The communicating hole 172 is an air hole through which to release air in the space to the exterior when the sleeve 52 and the end member 64 are assembled together, and functions as a passage through which a pressure occurring in the space is to be released when they are to be assembled.

As illustrated in FIG. 5A, the shaft support member 72 is formed such that a so-called D-cut process is performed on the outer periphery of a disk-shaped body thereof. And a pair of flat surfaces 180 are formed. A communicating path 182 is formed between the flat surface 180 and an inner circumferential surface of the core 50. As illustrated in FIG. 5B, the so-called D-cut process is performed on one side surface of the plunger 54 and thereby a flat surface 77 is formed thereon. A communicating path 183 is formed between the flat surface 77 and the sleeve 52. A communicating groove 71, having a predetermined width, formed in parallel with the axis line is provided on an opposite lateral surface 79 of the plunger 54. A communicating path 185 is formed between the communicating groove 71 and the sleeve 52. As illustrated in FIG. 5C, the shaft support member 76 is formed such that the so-called D-cut process is performed as well on the outer periphery of a disk-shaped body thereof. And a pair of flat surfaces 184 are formed. A communicating path 186 is formed between the flat surface 184 and the sleeve 52. The suction pressure Ps of the working chamber 28 passes through the communicating paths 182, 183, 185, and 186 and then fills the interior of the sleeve 52.

As described earlier, the plunger 54 undergoes the D-cut process, and the cross section thereof is non-circular (not point-symmetrical relative to a shaft's center). Thereby, the flat surface 77, on which the D-cut process has been carried out, is made to differ from the opposite lateral surface 79 in a radial magnetic gap. With this configuration and arrangement, the opposite lateral surface 79, which is on a side where the magnetic gap with the sleeve 52 is smaller, is attracted more strongly in a radial direction, when the solenoid 3 is turned on. In other words, the plunger 54 can be radially pushed to one side. This can suppress or prevent the rattling movement of the plunger 54 in a radial direction when the plunger 54 operates and moves inside the sleeve 52 while the valve section is opened. Also, an appropriate amount of sliding resistance, between the shaft 68 and the shaft support members 72 and 76, caused by such a configuration can suppress the micro-vibration of the valve element 24 due to a PWM (Pulse Width Modulation) control. As a result, noises, such as the operating sound of the plunger 54 and the hitting sound made when the valve element 24 is seated, can be reduced.

Now refer back to FIG. 2. In the above-described configuration, the diameter of the actuating rod 34 is slightly smaller than the inside diameter of the valve hole 18 but is of a size approximately identical thereto. Thus, the effect of the crank pressure Pc acting on the valve element 24 in the valve chamber 20 is almost canceled out. As a result, the differential pressure (Pd - Ps) between the discharge pressure Pd and the suction pressure Ps practically acts on the valve element 24 for a pressure-receiving area having approximately the same size as that of the valve hole 18. The valve element 24 operates and moves such that the differential pressure (Pd - Ps) is kept at a preset differential pressure set by a control current supplied to the solenoid 3.

A basic operation of the control valve for the variable displacement compressor is now explained.

In the control valve 1, when the solenoid 3 is turned off, the valve element 24 gets separated away from the valve seat 22 by the net force of the springs 40 and 78 in a valve opening direction with the result that the valve section is remained at a fully opened state. At this time, a high-pressure refrigerant having the discharge pressure Pd introduced into the port 10 from the discharge chamber 114 of the compressor 101 passes through the fully-opened valve section and then flows into the crankcase 116 through the port 12. As a result, the crank pressure Pc is raised and the compressor 101 carries out the minimum capacity operation where the discharging capacity is the minimum.

When, on the other hand, at the startup of the automotive air conditioner or when the cooling load is the maximum, the value of current supplied to the solenoid 3 is the maximum and the plunger 54 is attracted by a maximum suction force of the core 50. At this time, the actuating rod 34 (including the valve element 24), the shaft 68 and the plunger 54 operate and move integrally altogether in a valve closing direction, and the valve element 24 is seated on the valve seat 22. The crank pressure Pc drops by this valve closing movement and therefore the compressor 101 carries out a maximum capacity operation where the discharging capacity is the maximum.

When the value of current supplied to the solenoid 3 is set to a predetermined value while the capacity is being controlled, the actuating rod 34 (including the valve element 24), the shaft 68 and the plunger 54 operate and move integrally altogether. At this time, the valve element 24 stops at a valve-lift position. This valve-lift position is a position where five loads/forces are all balanced thereamong. Here, the five loads/forces are the spring load of the spring 40 that biases the actuating rod 34 in a valve opening direction, the spring load of the spring 78 that biases the plunger 54 in a valve opening direction, the load of the solenoid 3 that biases the plunger 54 in a valve closing direction, the force by the discharge pressured Pd that the valve element 24 receives in a valve opening direction, and the force by the suction pressure Ps that the valve element 24 receives in a valve closing direction.

If, in this balanced state, the rotating speed of the compressor 101 rises simultaneously with an increased engine speed and thereby the discharging capacity increases, the differential pressure (Pd - Ps) will increase and then the force in a valve opening direction will exert on the valve element 24. As a result, the valve element 24 further uplifts its position and thereby the flow rate of refrigerant flowing from the discharge chamber 114 to the crankcase 116 increases. This, in turn, causes the crank pressure Pc to rise and then the compressor 101 operates in a direction such that the discharging capacity is reduced. Then the compressor 101 is controlled such that the differential pressure (Pd - Ps) becomes the preset differential pressure. If the engine speed drops, the compressor 101 operates in a manner reverse to the aforementioned operation and then the compressor 101 is controlled such that the differential pressure (Pd - Ps) becomes the preset differential pressure.

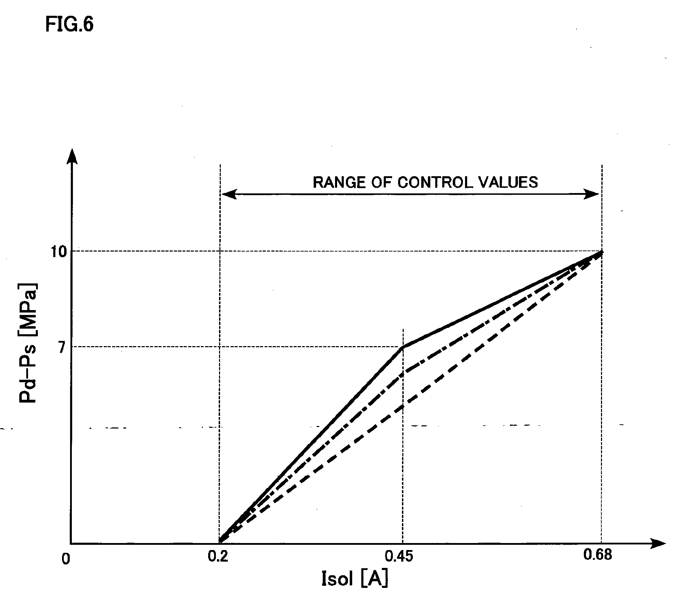

FIG. 6 is a graph showing control characteristic of the solenoid 3. The horizontal axis of FIG. 6 indicates a value of current supplied to the solenoid 3 (Isol (A)), and the vertical axis thereof indicates a preset differential pressure (Pd - Ps) (Mpa) as the control target value. In the present embodiment, the surface of the core 50, which faces the surface of the plunger 54, and the surface of the plunger 54, which faces the surface of the core 50, are formed in the tapered shapes complementary to each other, as described above. As a result, the resolution power in a high current domain is improved in a range of the control current values (hereinafter referred to as a "control current value range" also).

In other words, as described above, the angles of the tapered surfaces at a core 50 side and a plunger 54 side are each set to 45 degrees (θ1 = θ2 = 45 degrees in FIG. 4A). Thereby, as indicated by a solid line in FIG. 6, the characteristic after an intermediate value in the control current value range is varied. In other words, as the control characteristic of the solenoid 3, the slope (rate of change or amount of change) of a preset differential pressure (Pd - Ps) relative to the value of current supplied thereto (Isol) is set smaller in a high current domain after the intermediate value than the slope of a low current domain before the intermediate value. More specifically, the control current value range is the range of 0.2 A to 0.68 A, and the control characteristic is varied before and after an intermediate value between 0.2 A and 0.68 A, which is 0. 45 A, as a boundary value. Thereby, the resolution power in the high current domain improves. This means that when the preset differential pressure (Pd - Ps) is increased, a finer adjustment of the preset differential pressure can be made. In other words, the amount of change in the electromagnetic force of the solenoid 3 can be made smaller in the high current domain than in the other domain. In the present embodiments, carbon dioxide, which operates under a high pressure, is used as the refrigerant. Thus, it is extremely convenient and advantageous that the accuracy of control can be enhanced in a range where the differential pressure is large.

A dashed line in FIG. 6 shows a case where the angle of the tapered surface is set to 30 degrees (θ1 = θ2 = 30 degrees), and a broken line shows a case where the angle of the tapered surface is set to 20 degrees (θ1 = θ2 = 20 degrees). As evident from FIG. 6, the variation in the characteristic before and after the intermediate value (the boundary value) can be made larger by taking a larger taper angle. Conversely, the variation in the characteristic before and after the intermediate value can be made smaller by taking a smaller taper angle. Hence, the optimum control characteristic can be achieved by varying the taper angle in accordance with the specifications.

As described above, in the present embodiment, the D-cut process is performed on one side surface of the plunger 54, thereby achieving an asymmetrical structure in the solenoid 3. Thus, when the solenoid 3 electrically conducts, a force, by which the plunger 54 is radially moved or pushed to one side thereof, acts on the plunger 54, so that the sliding resistance inside the solenoid 3, when the plunger 54 operates, can be made appropriately large. As a result, the micro-vibration of the valve element 24 due to the PWM control can be suppressed and the noise caused by the micro-vibration can be suppressed.

### [Second Embodiment]

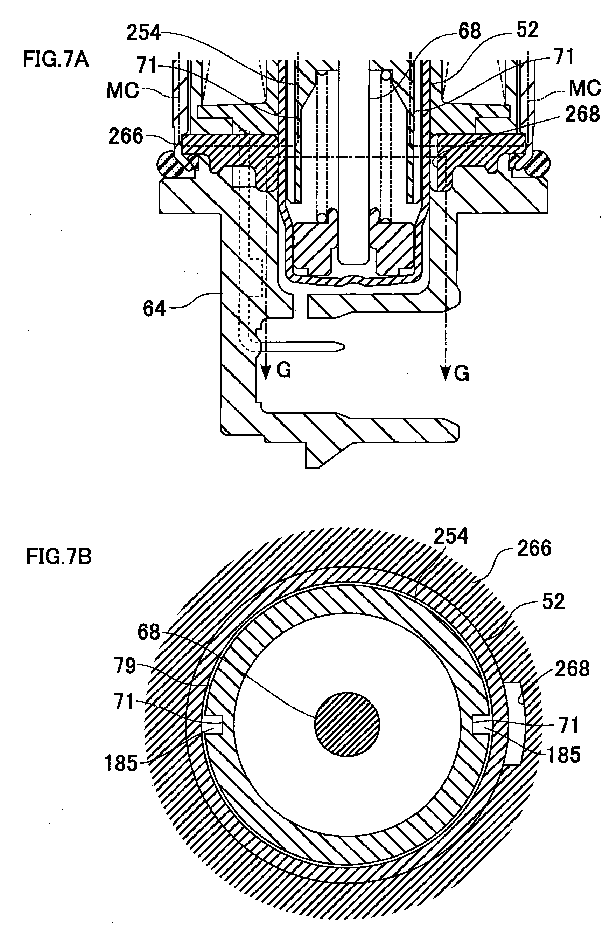

FIGS. 7A and 7B show major components of a control valve according to a second embodiment. A description is hereinbelow given centering around different features from the first embodiment. FIG. 7A is a partially enlarged cross-sectional view of the lower half of the control valve. FIG. 7B is a cross-sectional view taken along the line G-G on the arrows of FIG. 7A. Note that the structural components of the second embodiment closely similar to those of the first embodiment are given the identical reference numerals.

In the control valve according to the second embodiment, a plunger 254 is configured symmetrical about the axis line. On the other hand, a recessed notch 268 is formed in a specific position of an inner circumferential surface of a collar 266. With this structure and arrangement, the suction force of the solenoid is biased toward one side when the solenoid is turned on. This can suppress the rattling movement of the plunger 254 in a radial direction when the plunger 254 moves inside the sleeve 52 while the valve section is opened. Also, an appropriate amount of sliding resistance between the shaft 68 and the shaft support members 72 and 76 achieved by such a structure described above can suppress the micro-vibration of the valve element 24 due to the PWM control.

### [Third Embodiment]

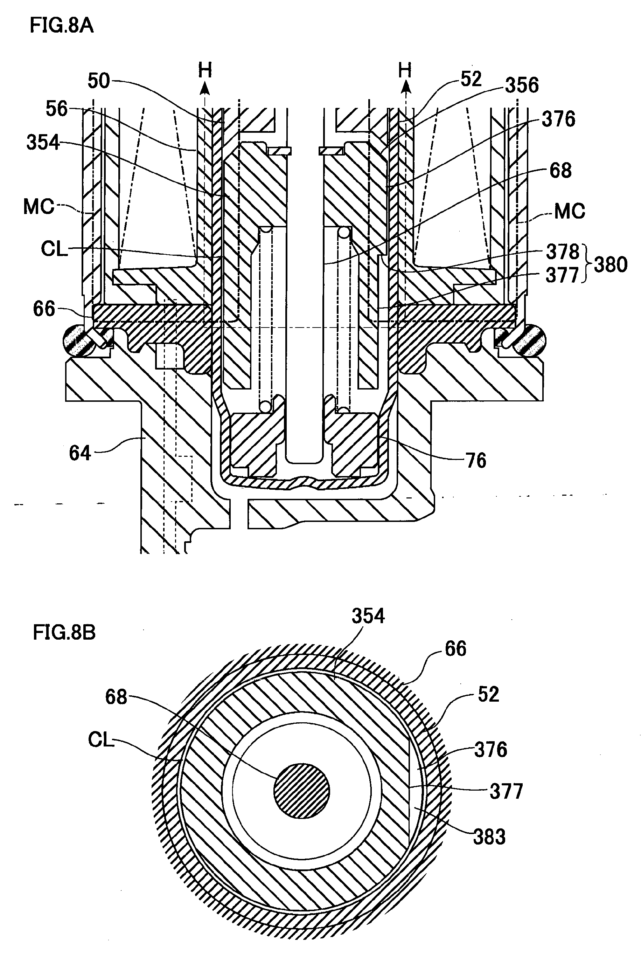

FIGS. 8A and 8B show major components of a control valve according to a third embodiment. A description is hereinbelow given centering around different features from the first embodiment. FIG. 8A is a partially enlarged cross-sectional view of the lower half of the control valve. FIG. 8B is a cross-sectional view taken along the line H-H on the arrows of FIG. 8A. Note that the structural components of the third embodiment closely similar to those of the first embodiment are given the identical reference numerals.

In the control valve according to the third embodiment, a cylindrical plunger 354 undergoes a partial D-cut process on one side surface thereof, and a flat surface 377 is formed. The flat surface 377 is so formed as to reach an end of a plunger 354 opposite to the core 50, and a partial notch (cut-out) portion 380 is formed on one side of an outer circumferential surface of the plunger 354. In other words, the notch portion 380 has the flat surface 377, which faces an inner circumferential surface of the sleeve 52, and a stepped surface 378, which faces a bottom side of the sleeve 52 (an opposite side to the core 50). The notch portion 380 is formed such that the notch portion 380 is separated away from a facing surface 356 of the plunger 354 disposed counter to the core 50 and such that the notch portion 380 is formed on at least part of the magnetic circuit MC. A clearance CL the size of which is large enough to allow the refrigerant to pass through is formed between the plunger 354 and the sleeve 52. In other words, the plunger 354 does not slide relative to the sleeve 52, and the shaft 68, which supports the plunger 354, is slidably supported by the shaft support members 72 and 76 (see FIG. 2).

In other words, the asymmetrical structure in the solenoid according to the third embodiment is achieved by a notch (cut-out) structure partially formed on a lateral surface of the plunger 354. The asymmetrical structure causes the size (volume) of a space formed between the plunger 354 and the yoke (the collar 66) to differ in the volume thereof between one radial side of the plunger 354 and its opposite side. As a result, the magnetic attractive force radially acting on the plunger 354 is biased toward one side (the opposite side to the notch portion 380). That is, the plunger 354 can be radially pushed to one side. This can suppress or prevent the rattling movement of the plunger 354 in a radial direction when the plunger 354 operates and moves while the valve section is opened. Also, an appropriate amount of sliding resistance between the shaft 68 and the shaft support members 72 and 76 can suppress the micro-vibration of the valve element 24 due to the PWM control. As a result, noises, such as the operating sound of the plunger 354 and the hitting sound made when the valve element 24 is seated, can be reduced.

Also, the notch portion 380 is partially formed in the plunger 354 so that the notch portion 380 does not reach the facing surface 356 disposed counter to the core 50. Hence, a large facing area is ensured between the plunger 354 and the core 50, so that the magnetic attractive force can be efficiently obtained when the solenoid is turned on. Further, the notch portion 380 is so formed as to reach the one end of the plunger 354 opposite to the core 50. This is advantageous in that, for example, the cutting work of the flat surface 377 can be easily done.

### [Fourth Embodiment]

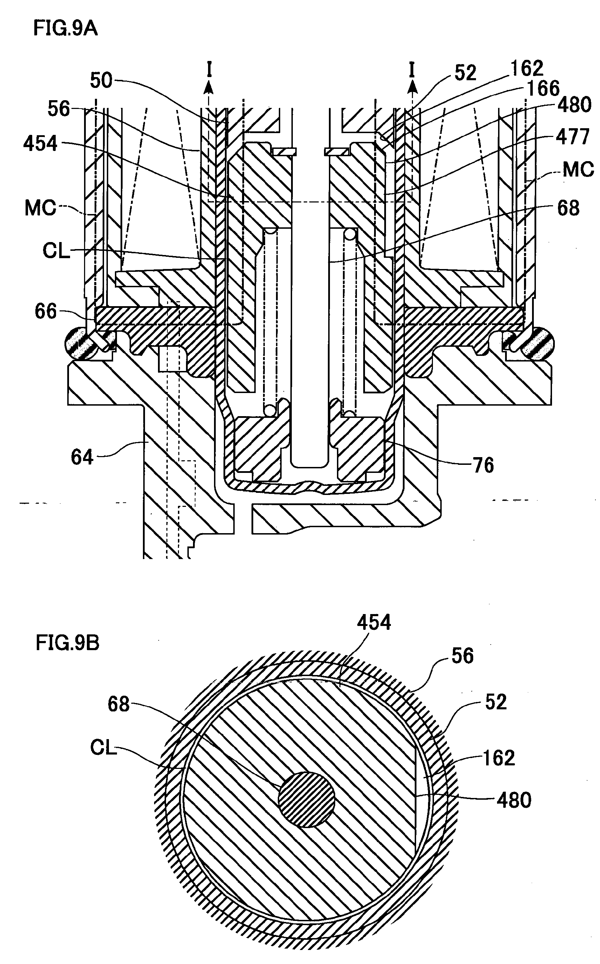

FIGS. 9A and 9B show major components of a control valve according to a fourth embodiment. FIG. 9A is a partially enlarged cross-sectional view of the lower half of the control valve. FIG. 9B is a cross-sectional view taken along the line I-I on the arrows of FIG. 9A. Note that the structural components of the fourth embodiment closely similar to those of the first embodiment are given the identical reference numerals.

In the control valve according to the fourth embodiment, a notch portion 480 is formed such that the D-cut process is performed on one side surface of an upper half of a plunger 454. The notch portion 480 is formed such that the tapered surface 166 of the plunger 454 is partially cut out and then a flat surface 477 parallel to the axis line is formed. The notch portion 480 according to the fourth embodiment differs from the first embodiment in that it is partially formed on one side surface of the plunger 454, and differs from the third embodiment in that it is formed on the facing surface of the plunger 454 disposed counter to the core 50.

In other words, the asymmetrical structure in the solenoid according to the fourth embodiment is achieved by a notch (cut-out) structure partially formed on an end surface and a lateral surface of the plunger 454. The asymmetrical structure causes the facing area of the tapered surface 166 of the plunger 454 disposed counter to the core 50 to differ between on one radial side of the plunger 454 and its opposite side. As a result, the magnetic attractive force radially acting on the plunger 454 is biased toward one side (the opposite side to the notch portion 480). That is, the plunger 454 can be radially pushed to one side. This can suppress or prevent the micro-vibration of the valve element 24 due to the PWM control and can reduce the noise, such as the operating sound of the plunger 454 and the hitting sound made when the valve element 24 is seated.

The description of the present invention given above is based upon illustrative embodiments. These embodiments are intended to be illustrative only and it will be obvious to those skilled in the art that various modifications could be developed within the technical idea underlying the present invention.

In the first embodiment, an exemplary asymmetrical structure in the solenoid is achieved where the notch portions (including the grooves) are formed on one side surface of the plunger and the opposite side surface thereof, respectively. Here, the size of the notch portion formed on one side surface and that of the notch portion on the opposite side surface are made to differ from each other. Also, in each of the third and fourth embodiments, another exemplary asymmetrical structure in the solenoid is achieved where the notch portion is formed on only one side of the plunger. In a modification, still another asymmetrical structure in the solenoid may be achieved where the number of notch portions formed on one side surface of the plunger differs from the number of notch portions formed on the opposite side surface thereof.

In the fourth embodiment, an example is shown where the plunger 454 and the core 50 have the tapered surfaces 166 and 162, respectively, which are complementary in shape to each other, and the notch portion 480 is formed on one of these tapered surfaces 166 and 162, namely on the tapered surface 166 of the plunger 454. In a modification, still another asymmetrical structure in the solenoid may be achieved where the notch portion is formed on the tapered surface 162 of the core 50 instead of the tapered surface 166 of the plunger 454. Or alternatively, still another asymmetrical structure may be achieved where the notch portions may be formed both on the tapered surfaces of the plunger 454 and the core 50.

Also, in the above-described fourth embodiment, an example is shown where the tapered surfaces, which are complementary in shape to each other, are provided on the outer circumferential edges of the facing surfaces of the plunger 454 and the core 50, respectively. In a modification, the tapered surfaces, which are complementary in shape to each other, may be provided on inner circumferential edges of the facing surfaces of the plunger and the core, respectively. The tapered surfaces are tilted relative to the axis line. Then the notch portion may be formed on at least one of the plunger and the core so as to achieve an asymmetrical structure.

Or alternatively, an asymmetrical shape such as a partial notch may be given such that the partial notch or the like is formed on each of flat faces, which are the facing surface of the plunger and the core and which are perpendicular to the axis line. Thereby, the magnetic attractive force acting on the plunger is made relatively larger on one side in a radial direction, so that the above-described operation and advantageous effects may be achieved.

In the above-described embodiments, an example is shown where the shaft support member 76 not only functions as a spring support for supporting the spring 78 but also functions as a shaft support for supporting the shaft 68. In a modification, a spring support for supporting the spring 78 and a shaft support for supporting the shaft 68 may be provided separately; and the above-described press-fitting adjustment structure may be applied to this spring support.

In the above-described embodiments, an exemplary configuration is shown where the shaft 68 is two-point supported by the shaft support members 72 and 76. In this configuration, the noise is suppressed by the sliding resistance between these shaft supports and the shaft 68. In other words, the plunger is so configured that it basically does not slide relative to the sleeve or the like. In a modification, a configuration may be such that, for example, the supporting structure using the shaft support member 76 is omitted and the plunger slides relative to the sleeve 52. In such a configuration, too, the function of pushing the plunger to one side by formation of the notch portion(s) is still in effect. Also, the noise can be suppressed through an appropriate amount of sliding resistance by the plunger.

In the above-described embodiments, an exemplary structure is shown where the actuating rod 34 and the shaft 68 are manufactured as separate units and then they are coupled together such that both of them are coaxially abutted against each other in the direction of axis line, thereby constituting the thus coupled one as a transmitting rod for transmitting the solenoidal force to the valve element 24. In a modification, the actuating rod 34 and the shaft 68 may be integrally formed as a single element.

In the above-described embodiments, an exemplary case is shown where the bottomed sleeve 52 is used as a sealing member for sealing an end portion of the core 50. However, this should not be considered as limiting and other structures may be employed. For example, another stopper member or plugging member may be attached or assembled to an opening end of the cylindrical sleeve so as to achieve a sealing structure. Also, in the above-described embodiments, an example is shown where the plunger is arranged opposite to the body 5 in relation to the core 50. Instead, the positional relation between the plunger and the core may be switched. In this case, an end portion of the core opposite to the plunger may be sealed off by the sealing member.

In the above-described embodiments, an example is shown where the -control valve 1 is configured as a so-called (Pd - Ps) differential pressure valve. In a modification, the control valve 1 may be configured as a so-called (Pc - Ps) differential pressure valve, for instance. In this (Pc - Ps) differential pressure valve, a differential pressure (Pc - Ps) between the crank pressure Pc and the suction pressure Ps is brought closer to a preset differential pressure, which is a control target value. In other words, each of the above-described structures according to the above-described embodiments may be applied to a control valve that varies the discharging capacity of the variable displacement compressor, for compressing the refrigerant led into the suction chamber and then discharging the compressed refrigerant from the discharge chamber, by regulating the flow rate of refrigerant led out to the suction chamber from the crankcase (control chamber). Or alternatively, the control valve 1 may be applied to a so-called Ps control valve in which the suction pressure Ps is brought closer to a preset pressure, which is a control target value. In particular, when those control valves are to be applied to the supercritical refrigeration cycle that uses carbon dioxide or the like as the refrigerant, the functions of the above-described respective structures are effectively achieved.

In the above-described embodiments, an example is shown where the control valve having the above-described respective structures is applied to the supercritical refrigeration cycle that uses carbon dioxide as the refrigerant. In a modification, a similar control valve may be applied to a supercritical refrigeration cycle that uses a substance other than carbon dioxide as the refrigerant. Or alternatively, a similar control valve may be applied to a refrigeration cycle that does not operate in a supercritical range but to the refrigeration cycle where the pressure of refrigerant gets high. For example, it may be applied to a refrigeration cycle where HFC-134a, HFO-1234yf or the like is used as the refrigerant.

The present invention is not limited to the above-described embodiments and modifications only, and those components may be further modified to arrive at various other embodiments without departing from the scope of the invention. Also, various other embodiments may be further formed by combining, as appropriate, a plurality of structural components disclosed in the above-described embodiments and modification. Also, one or some of all of the components exemplified in the above-described embodiments and modifications may be left unused or removed.

## Claims

1. A control valve (1) for a variable displacement compressor (101) for varying a discharging capacity of the compressor (101) for compressing refrigerant led into a suction chamber (110) and discharging the compressed refrigerant from a discharge chamber (114), by regulating a flow rate of the refrigerant led into a control chamber (116) from the discharge chamber (114), the control valve (1) comprising:
a body (5) having a discharge chamber communication port (10) communicating with the discharge chamber (114), a control chamber communication port (12) communicating with the control chamber (116), and a valve hole (18) formed in a passage connecting the discharge chamber communication port (10) and the control chamber communication port (12);
a valve element (24) for opening and closing a valve section, the valve element (24) being arranged in such a manner as to move toward and away from the valve hole (18);
a solenoid (3) that generates a magnetic attractive force with which to drive the valve element (24) in a valve closing direction, wherein a conduction state of the solenoid (3) is controlled by a PWM (Pulse Width Modulation) technique; and
a transmitting rod (34, 68) that transmits a drive force, generated by the solenoid (3), to the valve element (24), the transmitting rod (34, 68) being supported within the body (5) and moving in a direction of axis line,
the solenoid (3) including:
a bobbin (56);
an electromagnetic coil (58) wound around the bobbin (56);
a core (50) fixed to the body (5) coaxially with the bobbin (56);
a plunger (54) disposed opposite to the core (50) in a direction of axis line inside the bobbin (56), the plunger (54) being displaceable integrally with the transmitting rod (34, 68) in the direction of axis line;
a yoke (60, 62, 66), provided in such a manner as to surround the electromagnetic coil (58) as well as the core (50) and the plunger (54), the yoke forming a magnetic circuit when the electromagnetic coil (58) electrically conducts; and **characterized by** having
an asymmetrical structure by which balance of the magnetic attractive force radially acting on the plunger (54) is biased toward one side, the asymmetrical structure including a structural portion asymmetric with respect to the axis line of the bobbin (56).

2. A control valve (1), for a variable displacement compressor, according to claim 1, wherein the asymmetrical structure is achieved such that size of a space formed between the plunger (54) and the yoke (60, 62, 66) is made to differ between on one radial side of the plunger (54) and its opposite side.

3. A control valve (1), for a variable displacement compressor, according to claim 2, wherein the asymmetrical structure is achieved by a cut-out structure (71, 77, 268, 380, 480) formed on a lateral surface of the plunger (54).

4. A control valve (1), for a variable displacement compressor, according to claim 3, wherein the asymmetrical structure is achieved such that size of or the number of cut-out portion (71, 77, 377, 477) formed on one side surface of the plunger (54) is made to differ from the size of or the number of cut-out portion formed on an opposite side surface thereof.

5. A control valve (1), for a variable displacement compressor, according to claim 3 or claim 4, wherein the asymmetrical structure is achieved by a cut-out portion (380), which is formed on one side surface of the plunger (54) such that the cut-out portion (380) is separated away from a facing surface of the plunger (54) disposed counter to the core (50) and such that the cut-out portion (380) is formed on at least part of the magnetic circuit.

6. A control valve (1), for a variable displacement compressor, according to claim 5, wherein the cut-out portion (380) is so formed as to reach an end of the plunger (54) opposite to the core (50).

7. A control valve (1), for a variable displacement compressor, according to claim 1, wherein the asymmetrical structure is achieved by an asymmetrical shape (71, 77, 480), which is asymmetrical with respect to the axis line and which is formed on at least one of a facing surface of the plunger (54) disposed counter to the core (5) and a facing surface of the core (50) disposed counter to the plunger (54).

8. A control valve (1), for a variable displacement compressor, according to claim 7, wherein the asymmetrical structure is achieved by the cut-out portion (71, 77, 480) formed on a part of the facing surface of the plunger (54) disposed counter to the core (50).

9. A control valve (1), for a variable displacement compressor, according to claim 8, wherein tapered surfaces (162, 166), which are tilted relative to a first axis line and a second axis line, respectively, and which are complementary in shape to each other, are formed on facing surfaces of the plunger (54) and the core (50), and
wherein the cut-out portion (71, 77, 480) is formed by partially cutting out the tapered surface (166) of the plunger (54).

10. A control valve (1), for a variable displacement compressor, according to claim 9, wherein the tapered surface (166) is provided on a peripheral edge of the plunger (54), and
wherein the cut-out portion (71, 77, 480) extends on a lateral surface of the plunger (54).

11. A control valve (1), for a variable displacement compressor, according to claim 10, wherein the cut-out portion (71, 77, 480) is continuously formed along a lateral surface of the plunger (54) such that the cut-out portion (71, 77, 480) reaches an end of the plunger (54) opposite to the core (50).

12. A control valve (1), for a variable displacement compressor, according to any one of claim 1 to claim 11, wherein the control valve (1) is applied to a refrigeration cycle in which a refrigeration operation is performed in a supercritical range exceeding a critical temperature of the refrigerant.

13. A control valve (1), for a variable displacement compressor, according to any one of claim 1 to claim 12, wherein a differential pressure (Pd - Ps) between a discharge pressure (Pd) of the discharge chamber (114) and a suction pressure (Ps) of the suction chamber (110) is controlled such that the differential pressure (Pd - Ps) is kept at a preset differential pressure according to a value of current supplied to the solenoid (3).

## Patentansprüche

1. Regelventil (1) für einen Verdichter (101) mit variabler Verdrängung zum Verändern einer Auslassleistung des Verdichters (101) für die Verdichtung eines in eine Ansaugkammer (110) eingeleiteten Kühlmittels und zum Auslassen des verdichteten Kühlmittels aus einer Auslasskammer (114) durch Regelung einer Strömungsgeschwindigkeit des aus der Auslasskammer (114) in eine Steuerkammer (116) eingeleiteten Kühlmittels, wobei das Regelventil (1) folgendes aufweist:
einen Korpus (5) mit einer Anschlussöffnung (10) zum Anschluss an die Auslasskammer, die mit der Auslasskammer (114) in Strömungsverbindung steht, einer Anschlussöffnung (12) zum Anschluss an die Steuerkammer, die mit der Steuerkammer (116) in Strömungsverbindung steht, und eine Ventilöffnung (18), die in einem Durchlass ausgebildet ist, der die Anschlussöffnung (10) zum Anschluss an die Auslasskammer mit der Anschlussöffnung (12) zum Anschluss an die Steuerkammer verbindet;
ein Ventilelement (24) zum Öffnen und Schließen eines Ventilabschnitts, wobei das Ventilelement (24) in der Weise angeordnet ist, dass es sich zur Ventilöffnung (18) hin und von dieser weg bewegt;
einen Magneten (3), der eine Magnetanzugskraft erzeugt, mit welcher das Ventilelement (24) in Schließrichtung angetrieben wird, wobei ein Leitungszustand des Magneten (3) mittels PWM-Technik (Modulation der Impulsbreite) gesteuert wird; und
eine Übertragungsstange (34, 68), welche die von dem Magneten (3) erzeugte Antriebskraft auf das Ventilelement (24) überträgt, wobei die Übertragungsstange (34, 68) im Inneren des Korpus (5) gelagert ist und sich in Richtung der Achslinie bewegt,
bei welchem der Magnet (3) folgendes umfasst:
einen Spulenkörper (56);
eine um den Spulenkörper (56) gewickelte elektromagnetische Spule (58),
ein Kernstück (50), das an dem Korpus (5) koaxial zu dem Spulenkörper fest angebracht ist;
einen Tauchkolben (54), der gegenüber dem Kernstück (50) in Richtung der Achslinie im Inneren des Spulenkörpers angeordnet ist, wobei der Tauchkolben (54) einstückig mit der Übertragungsstange (34, 68) in Richtung der Achslinie verschiebbar ist;
ein Magnetjoch (60, 62, 66), das in der Weise vorgesehen ist, dass es die elektromagnetische Spule (58) sowie das Kernstück (50) und den Tauchkolben (54) umgibt, wobei das Magnetjoch einen Magnetkreis bildet, wenn die elektromagnetische Spule (58) elektrisch leitend ist;
**dadurch gekennzeichnet, dass** es einen asymmetrischen Aufbau aufweist, mittels welchem der Ausgleich der radial auf den Tauchkolben (54) einwirkenden magnetischen Anzugskraft zu einer Seite vorgespannt wird, wobei der asymmetrische Aufbau einen Strukturabschnitt aufweist, der bezüglich der Achslinie des Spulenkörpers (56) asymmetrisch ist.

2. Regelventil (1) für einen Verdichter mit variabler Verdrängung nach Anspruch 1, bei welchem der asymmetrische Aufbau in der Form erreicht wird, dass die Größe eines freien Raumes, der zwischen dem Tauchkolben (54) und dem Magnetjoch (60, 62, 66) gebildet wird, so ausgebildet ist, dass zwischen einer radialen Seite des Tauchkolbens (54) und der gegenüber liegenden Seite unterschieden werden kann.

3. Regelventil (1) für einen Verdichter mit variabler Verdrängung nach Anspruch 2, bei welchem der asymmetrische Aufbau durch eine ausgeschnittene Struktur (71, 77, 268, 380, 480) erreicht wird, die auf einer seitlichen Fläche des Tauchkolbens (54) ausgebildet ist.

4. Regelventil (1) für einen Verdichter mit variabler Verdrängung nach Anspruch 3, bei welchem der asymmetrische Aufbau in der Weise erreicht wird, dass die Größe oder die Anzahl des ausgeschnittenen Abschnitts bzw. der ausgeschnittenen Abschnitte (71, 77, 377, 477), der bzw. die auf einer Seitenfläche des Tauchkolbens (54) ausgebildet ist bzw. sind, so gehalten ist, dass sie sich von der Größe oder der Anzahl des ausgeschnittenen Abschnitts bzw. der ausgeschnittenen Abschnitte auf einer gegenüber liegenden Seite desselben unterscheidet.

5. Regelventil (1) für einen Verdichter mit variabler Verdrängung nach Anspruch 3 oder Anspruch 4, bei welchem der asymmetrische Aufbau mittels eines ausgeschnittenen Abschnitts (380) erreicht wird, der auf einer seitlichen Fläche des Tauchkolbens (54) in der Weise ausgebildet ist, dass der ausgeschnittene abschnitt (380) von einer Auskleidungsfläche des Tauchkolbens (54) weg getrennt ist, welche gegenüber dem Kernstück (50) liegt, und in der Weise, dass der ausgeschnittene Abschnitt (380) zumindest auf einem Teil des Magnetkreises ausgebildet ist.

6. Regelventil (1) für einen Verdichter mit variabler Verdrängung nach Anspruch 5, bei welchem der ausgeschnittene Abschnitt (380) so ausgebildet ist, dass er ein Ende des Tauchkolbens (54) erreicht, das gegenüber dem Kernstück (50) liegt.

7. Regelventil (1) für einen Verdichter mit variabler Verdrängung nach Anspruch 1, bei welchem der asymmetrische Aufbau mit einer asymmetrischen Form (71, 77, 480) erreicht wird, die bezüglich der Achslinie asymmetrisch ist und die auf mindestens einer Verkleidungsfläche des Tauchkolbens (54) ausgebildet ist, welche gegenüber dem Kernstück (5) angeordnet ist, oder einer Verkleidungsfläche des Kernstücks (50), die gegenüber dem Tauchkolben (54) liegt.

8. Regelventil (1) für einen Verdichter mit variabler Verdrängung nach Anspruch 7, bei welchem der asymmetrische Aufbau mittels des ausgeschnittenen Abschnitts (71, 77, 480) erreicht wird, der auf einem Teil der Verkleidungsfläche des Tauchkolbens (54) ausgebildet ist, welche gegenüber dem Kernstück (50) liegt.

9. Regelventil (1) für einen Verdichter mit variabler Verdrängung nach Anspruch 8, bei welchem konisch zulaufende Flächen (162, 166), die bezüglich einer ersten Achslinie bzw. einer zweiten Achslinie schräg stehen und bezüglich ihrer Form komplementär zueinander sind, auf Verkleidungsflächen des Tauchkolbens (54) und des Kernstücks (50) ausgebildet sind, und
bei welchem der ausgeschnittene Abschnitt (71, 77, 480) dadurch gebildet wird, dass die konisch zulaufende Fläche (166) des Tauchkolbens (54) teilweise ausgeschnitten ist.

10. Regelventil (1) für einen Verdichter mit variabler Verdrängung nach Anspruch 9, bei welchem die konisch zulaufende Fläche (166) auf einer umlaufenden Kante des Tauchkolbens (54) vorgesehen ist, und bei welchem der ausgeschnittene Abschnitt (71, 77, 480) auf einer seitlichen Fläche des Tauchkolbens (54) verläuft.

11. Regelventil (1) für einen Verdichter mit variabler Verdrängung nach Anspruch 10, bei welchem der ausgeschnittene abschnitt (71, 77, 480) fortlaufend entlang einer seitlichen Fläche des Tauchkolbens (54) in der Weise ausgebildet ist, dass der ausgeschnittene Abschnitt (71, 77, 480) ein Ende des Tauchkolbens (54) gegenüber dem Kernstück (50) erreicht.

12. Regelventil (1) für einen Verdichter mit variabler Verdrängung nach einem der Ansprüche 1 bis 11, bei welchem das Regelventil (1) bei einem Kühlkreislauf eingesetzt ist, in welchem ein Kühlbetrieb im superkritischen Bereich abläuft, der eine kritische Temperatur des Kühlmittels überschreitet.

13. Regelventil (1) für einen Verdichter mit variabler Verdrängung nach einem der Ansprüche 1 bis 12, bei welchem ein Druckunterschied (Pd - Ps) zwischen einem Auslassdruck (Pd) der Auslasskammer (114) und einem Ansaugdruck (Ps) der Ansaugkammer (110) in der Weise geregelt wird dass der Druckunterschied (Pd - Ps) in Entsprechung zu einem Wert des dem Magneten (3) zugeführten Stroms auf einem voreingestellten Differentialdruckwert gehalten wird.

## Revendications

1. Vanne de commande (1) pour un compresseur à cylindrée variable (101) pour modifier une capacité de refoulement du compresseur (101) pour comprimer le fluide frigorigène amené dans une chambre d'aspiration (110) et refouler le fluide frigorigène comprimé à partir d'une chambre de refoulement (114), en régulant un débit du fluide frigorigène amené dans une chambre de commande (116) à partir de la chambre de refoulement (114), la vanne de commande (1) comprenant:
un corps (5) comportant un orifice de communication de chambre de refoulement (10) communiquant avec la chambre de refoulement (114), un orifice de communication de chambre de commande (12) communiquant avec la chambre de commande (116), et un orifice de vanne (18) formé dans un passage reliant l'orifice de communication de chambre de refoulement (10) et l'orifice de communication de chambre de commande (12);
un élément de vanne (24) pour ouvrir et fermer une section de vanne, l'élément de vanne (24) étant agencé de manière à se rapprocher et s'éloigner de l'orifice de vanne (18);
un solénoïde (3) qui génère une force d'attraction magnétique avec laquelle l'élément de vanne (24) est entraîné dans une direction de fermeture de vanne, dans laquelle un état de conduction du solénoïde (3) est commandé par une technique de PWM (modulation de durée d'impulsion); et
une tige de transmission (34, 68) qui transmet une force d'entraînement, générée par le solénoïde (3), à l'élément de vanne (24), la tige de transmission (34, 68) étant supportée dans le corps (5) et se déplaçant dans une direction de la ligne d'axe,
le solénoïde (3) comprenant:
un support de bobine (56);
une bobine électromagnétique (58) enroulée autour du support de bobine (56);
un noyau (50) fixé au corps (5) coaxialement au support de bobine (56);
un piston (54) disposé à l'opposé du noyau (50) dans une direction de ligne d'axe à l'intérieur du support de bobine (56), le piston (54) pouvant être déplacé d'un seul tenant avec la tige de transmission (34, 68) dans la direction de la ligne d'axe;
une culasse (60, 62, 66), prévue de manière à entourer la bobine électromagnétique (58) ainsi que le noyau (50) et le piston (54), la culasse formant un circuit magnétique lorsque la bobine électromagnétique (58) conduit électriquement; et
**caractérisée en ce qu'**elle a
une structure asymétrique par laquelle l'équilibre de la force d'attraction magnétique agissant radialement sur le piston (54) est décalé vers un côté, la structure asymétrique comprenant une partie structurelle asymétrique par rapport à la ligne d'axe du support de bobine (56).

2. Vanne de commande (1), pour un compresseur à cylindrée variable, selon la revendication 1, dans laquelle la structure asymétrique est réalisée de sorte que la taille d'un espace formé entre le piston (54) et la culasse (60, 62, 66) soit amenée à être différente entre un côté radial du piston (54) et son côté opposé.

3. Vanne de commande (1), pour un compresseur à cylindrée variable, selon la revendication 2, dans laquelle la structure asymétrique est réalisée par une structure découpée (71, 77, 268, 380, 480) formée sur une surface latérale du piston (54).

4. Vanne de commande (1), pour un compresseur à cylindrée variable, selon la revendication 3, dans laquelle la structure asymétrique est réalisée de sorte que la taille ou le nombre de parties découpées (71, 77, 377, 477) formées sur une surface d'un côté du piston (54) soit amené à différer de la taille ou du nombre de parties découpées formées sur une surface du côté opposé de celui-ci.

5. Vanne de commande (1), pour un compresseur à cylindrée variable, selon la revendication 3 ou la revendication 4, dans laquelle la structure asymétrique est réalisée par une partie découpée (380), qui est formée sur une surface d'un côté du piston (54) de sorte que la partie découpée (380) soit espacée d'une surface en vis-à-vis du piston (54) disposée face au noyau (50) et de sorte que la partie découpée (380) soit formée sur au moins une partie du circuit magnétique.

6. Vanne de commande (1), pour un compresseur à cylindrée variable, selon la revendication 5, dans laquelle la partie découpée (380) est ainsi formée de manière à atteindre une extrémité du piston (54) à l'opposé du noyau (50).

7. Vanne de commande (1), pour un compresseur à cylindrée variable, selon la revendication 1, dans laquelle la structure asymétrique est réalisée par une forme asymétrique (71, 77, 480), qui est asymétrique par rapport à la ligne d'axe et qui est formée sur au moins l'une d'une surface en vis-à-vis du piston (54) disposée face au noyau (50) et d'une surface en vis-à-vis du noyau (50) disposée face au piston (54).

8. Vanne de commande (1), pour un compresseur à cylindrée variable, selon la revendication 7, dans laquelle la structure asymétrique est réalisée par la partie découpée (71, 77, 480) formée sur une partie de la surface en vis-à-vis du piston (54) disposée face au noyau (50).

9. Vanne de commande (1), pour un compresseur à cylindrée variable, selon la revendication 8, dans laquelle des surfaces coniques (162, 166), qui sont inclinées par rapport à une première ligne d'axe et à une deuxième ligne d'axe, respectivement, et qui ont des formes complémentaires l'une de l'autre, sont formées sur les surfaces en vis-à-vis du piston (54) et du noyau (50), et dans laquelle la partie découpée (71, 77, 480) est formée en découpant partiellement la surface conique (166) du piston (54).

10. Vanne de commande (1), pour un compresseur à cylindrée variable, selon la revendication 9, dans laquelle la surface conique (166) est prévue sur un bord périphérique du piston (54), et dans laquelle la partie découpée (71, 77, 480) s'étend sur une surface latérale du piston (54).

11. Vanne de commande (1), pour un compresseur à cylindrée variable, selon la revendication 10, dans laquelle la partie découpée (71, 77, 480) est formée continûment le long d'une surface latérale du piston (54) de sorte que la partie découpée (71, 77, 480) atteigne une extrémité du piston (54) à l'opposé du noyau (50).

12. Vanne de commande (1), pour un compresseur à cylindrée variable, selon l'une quelconque de la revendication 1 à la revendication 11, dans laquelle la vanne de commande (1) est appliquée à un cycle de réfrigération dans lequel une opération de réfrigération est effectuée dans une plage supercritique dépassant une température critique du fluide frigorigène.

13. Vanne de commande (1), pour un compresseur à cylindrée variable, selon l'une quelconque de la revendication 1 à la revendication 12, dans laquelle une pression différentielle (Pd - Ps) entre une pression de refoulement (Pd) de la chambre de refoulement (114) et une pression d'aspiration (Ps) de la chambre d'aspiration (110) est commandée de sorte que la pression différentielle (Pd - Ps) soit maintenue à une pression différentielle présélectionnée conformément à une valeur du courant appliqué au solénoïde (3).
